# EUROPEAN PATENT APPLICATION

(11) **EP 4 549 604 A2**
(43) Date of publication of application: **07.05.2025**
(21) Application number: 23830609.6
(22) Date of filing: 28.06.2023
(51) Int. Cl.: C22C 30/00, C22C 30/02, C22C 30/04, C22C 30/06, C22C 32/00, C22C 1/05, B22F 9/04, B22F 3/10, C23C 4/131, C23C 4/06, A47J 36/02

(54) **MAGNETIC CONDUCTIVE MATERIAL FOR COOKWARE, PREPARATION METHOD FOR MAGNETIC CONDUCTIVE MATERIAL, AND COOKWARE**

(30) Priority: 29.06.2022 CN 202210761425
(71) Applicant: Wuhan Supor Cookware Co., Ltd., Wuhan, Hubei 430051 (CN)
(72) Inventor: QU, Yisheng, Wuhan, Hubei 430051 (CN); LI, Chao, Wuhan, Hubei 430051 (CN); YUAN, Huating, Wuhan, Hubei 430051 (CN); ZHANG, Ming, Wuhan, Hubei 430051 (CN)
(74) Representative: LLR
(86) International application number: PCT/IB2023/056651
(87) International publication number: WO 2024/003759

(57) **Abstract**

A magnetic conductive material for cookware, a preparation method thereof, and cookware containing said magnetic conductive material. The magnetic conductive material is composed of a high-entropy alloy and a rare earth oxide, wherein the high-entropy alloy comprises at least four of Mg, Al, Ti, V, Cr, Mn, Fe, Co, Ni, Cu, Zn, Zr, Nb, Mo, Sn, Hf, Ta, W, Pb, Si and B and at least comprises one or more of Fe, Co and Ni. The rare earth oxide comprises an oxide of at least one of lanthanides, Sc and Y.

## Description

### Field of the Invention

The present invention relates to the field of cookware, and more specifically, to a magnetic conductive material for cookware, a preparation method of the magnetic conductive material, and cookware comprising the magnetic conductive material.

### Background of the Invention

The general compatibility of existing cookware products (except iron pots) with induction cookers is generally achieved by adding a magnetic conductive material to their outer surface. Specifically, the following technical solutions may be adopted: (1) adding a cold-riveted stainless steel composite bottom sheet to the outer surface of a compatible cookware product; (2) preparing the body of a compatible cookware product in composite material of stainless steel or iron; (3) hot-spraying a composite material of stainless steel or iron on the outer bottom surface of a compatible cookware product. The above methods have the advantages of fast heating, convenience and cleanliness. But the disadvantage is uneven heat conduction at the bottom, resulting in a high local temperature and making it easy to burn the bottom, or even cause the bottom of the cookware to deform and become scrapped due to dry burning.

### Summary of the Invention

An object of the present invention is to provide a magnetic conductive material. The magnetic conductive material uses high-entropy alloy and rare earth oxide to lower its Curie temperature, so that when the heating temperature reaches the Curie temperature, the magnetic conductive material can continue to operate at low power, thereby preventing the problem of dry burning of magnetic permeable products (such as induction cooker compatible cookware or pots) when the temperature continues to rise during use.

Another object of the present invention is to provide a preparation method of a magnetic conductive material having adjusted Curie temperature.

Yet another object of the present invention is to provide a type of cookware (hereinafter referred to as the cookware for short). The cookware operates at low power when the heating temperature reaches the Curie temperature, thereby preventing the dry burning and other problems caused by a continuously rising temperature during use.

According to one aspect of the present invention, a magnetic conductive material is provided, the magnetic conductive material being consisting of a high-entropy alloy and a rare earth oxide, wherein the high-entropy alloy comprises at least four of Mg, Al, Ti, V, Cr, Mn, Fe, Co, Ni, Cu, Zn, Zr, Nb, Mo, Sn, Hf, Ta, W, Pb, Si and B, and at least comprises one or more of Fe, Co and Ni, and the rare earth oxide comprises an oxide of at least one of lanthanides, Sc and Y. The high-entropy alloy may significantly reduce the Curie temperature of the alloy, and the rare earth oxide allows to further adjust the Curie temperature of the high-entropy alloy. When the heating temperature reaches the Curie temperature, the magnetic conductive material operates at low power, thus preventing magnetic permeable products comprising the magnetic conductive material (such as induction cooker compatible cookware) from dry burning or having the bottom burnt when the temperature continuously rises during use.

In an embodiment of the present invention, based on the total amount of substance of the high-entropy alloy and the rare earth oxides being 100%, the amount of substance of the high-entropy alloy is 80% to 95%, and the balance is the rare earth oxide. The magnetic conductive material comprising the high-entropy alloy and the rare earth oxide in the above content range can significantly reduce its Curie temperature.

In an embodiment of the present invention, based on the total atomic number of the high-entropy alloy, the atomic number proportion of each element in the high-entropy alloy may be 5at% to 35at%, and the total atomic number proportion of Fe, Co and Ni may be 35at% to 95at%. This high-entropy alloy will significantly reduce the Curie temperature of the alloy. When the temperature reaches the Curie point, the high-entropy alloy material changes from ferromagnetic to paramagnetic, and thus stops generating heat on the induction cooker, thereby preventing damage to the cookware due to dry burning caused by an excessive temperature.

In an embodiment of the present invention, the high-entropy alloy may comprise at least one of AlCrFeCoNi, AlCrFeTiNi, AlCrFeCoNiCu, Al2CrFe3CoNiCu, AlCrFeMnNi, AlCr1.5Fe3MnNi, FeNiAlCr and FeNiAl2Cr. The above high-entropy alloy has a reduced Curie temperature.

According to another aspect of the present invention, a preparation method of a magnetic conductive material is provided, the method comprising: ball milling a high-entropy alloy and a rare earth oxide; solid phase sintering the ball milled powder; and mechanically crushing the magnetic conductive material blocks obtained by the solid phase sintering. The magnetic conductive material prepared by the above method has a reduced Curie temperature, so that when the heating temperature reaches the Curie temperature, the magnetic conductive material operates at low power, thereby preventing the magnetic permeable product (such as induction cooker compatible cookware or pots) from dry burning and burnt bottom, which may be caused if the temperature continuously rises during use.

In an embodiment of the present invention, in the ball milling step, ball milling may be performed in a ball mill to obtain powder having a particle size greater than 300 mesh, which is then kept at 80°C to 200°C for 2 h to 4 h to be dried. Ball milling ensures that the particle size of the high-entropy alloy and the rare earth oxide is fine and the high-entropy alloy and the rare earth oxide are fully mixed.

In an embodiment of the present invention, in the ball milling step, parameters may be set as follows: the rotation speed being 100r/min to 500r/min, the ball-to-material ratio being 2:1 to 20:1, the ball milling medium being anhydrous ethanol or polyvinyl alcohol, the ball milling atmosphere being vacuum or 99.999% argon atmosphere, and the ball milling duration being 20h to 50h. Anhydrous ethanol or polyvinyl alcohol will not dissolve raw materials, and the use of anhydrous ethanol or polyvinyl alcohol in ball milling can increase the grinding efficiency and facilitate the refinement of powder.

In an embodiment of the present invention, in the solid phase sintering step, liquid paraffin may be added to the ball-milled powder. Then the mixture is fully mixed and pressed, and sintered at 800°C to 1,200°C for 5 h to 8 h, wherein the mass ratio of powder to liquid paraffin may be 5% to 10%. Through solid phase sintering, microscopically discrete powder particles can gradually form a continuous solid structure, reducing the overall free energy of the sample, thereby improving its strength.

In an embodiment of the present invention, in the mechanical crushing step, the crushed magnetic conductive material powder may be sieved to obtain a magnetic conductive material with a size of 200 to 800 mesh. A magnetic conductive material with a desired particle size can thus be obtained by mechanical crushing.

According to yet another aspect of the present invention, a type of cookware is provided, the cookware comprising a body and a magnetic conductive layer formed on an outer bottom surface of the cookware body, wherein the magnetic conductive layer comprises the magnetic conductive material. When the heating temperature reaches the Curie temperature, the cookware operates at low power, thereby preventing the problem of dry burning and burnt bottom which may be cause if the temperature continuously rises during use.

The magnetic conductive material of the present invention uses the high-entropy alloy and the rare earth oxide to reduce its Curie temperature, so that when the heating temperature reaches the Curie temperature, the magnetic conductive material operates at low power, thereby preventing the magnetic permeable product (such as induction cooker compatible cookware or pots) from dry burning and burnt bottom, which may be cause if the temperature continuously rises during use.

### Description of the Drawings

The above and/or other features and aspects of the present invention will become clear and easily understood through the description of embodiments in conjunction with the accompanying drawings.

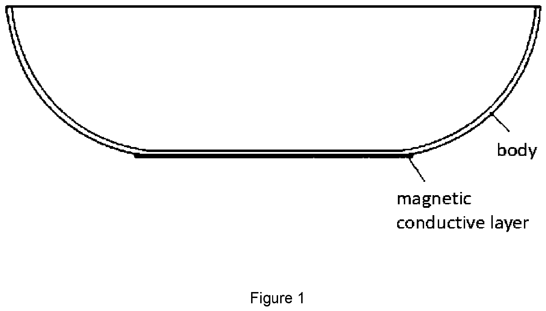

Figure 1 is a view showing a pot comprising a magnetic conductive material according to an embodiment of the present invention.

### Detailed Description of the Invention

The present invention will now be more fully described below in conjunction with exemplary embodiments. However, the present invention can be implemented in a variety of different forms and should not be understood as being limited to the exemplary embodiments set forth herein. These embodiments are provided so that the disclosure of the present invention will be thorough and complete, and the scope of the present invention will be fully conveyed to those skilled in the art.

The present invention provides a magnetic conductive material for magnetic permeable products (e.g., cookware). The magnetic conductive material is composed of a high-entropy alloy and a rare earth oxide to reduce the Curie temperature of the material, so that when the magnetic conductive material is heated to the Curie temperature, the conductive material pot can still operate at low power, thereby preventing the magnetic permeable products (such as induction cooker compatible cookware or pots) from dry burning and burnt bottom, which may be cause if the temperature continuously rises during use.

Ferromagnetic materials have strong magnetism after being magnetized. However, this strong magnetism is related to temperature. As the temperature of ferromagnetic materials increases, the thermal motion of metal lattices intensifies, which will affect the ordered arrangement of magnetic domains. For the ferromagnetic material, when a certain temperature has not been reached, the thermal motion is not enough to destroy the parallel arrangement of magnetic domains. At this time, the average magnetic moment of any macroscopic area is still not zero, and the ferromagnetic material still has magnetism, but the average magnetic moment decreases with the increase of temperature. However, when the ferromagnetic material is heated to a certain temperature, magnetic domains will disintegrate due to violent thermal motion of molecules, the average magnetic moment will drop to zero, the magnetism of the ferromagnetic material will disappear, and the material will become a paramagnetic material. A series of ferromagnetic properties associated with magnetic domains (for example, high magnetic permeability, magnetostriction, etc.) all disappear, the hysteresis loop disappears and becomes a straight line, and the corresponding magnetic permeability of the ferromagnetic material is converted into the magnetic permeability of a paramagnetic material. The temperature at which ferromagnetism disappears is the Curie temperature.

The magnetic conductive material for cookware according to the present invention comprises a high-entropy alloy that can significantly reduce the Curie temperature of the alloy. The BCC phase and FCC phase of the high-entropy alloy can significantly reduce the Curie temperature of the alloy. When the magnetic conductive material comprising the high-entropy alloy is heated to the Curie point, the magnetic conductive material changes from ferromagnetic to paramagnetic, and thus stops generating heat on an induction cooker or has an extremely low heating power, so that the temperature of the cookware comprising the magnetic conductive material cannot continue to rise. When the temperature of the cookware decreases due to the paramagnetic nature of the magnetic conductive material, the magnetic conductive material changes back from paramagnetic to ferromagnetic, it can be heated up again. Finally, the temperature of the cookware reaches a dynamic equilibrium around the Curie point, thereby making it possible to avoid dry burning and damage to the cookware (for example, deforming the cookware, discoloring, damage and failure of a non-stick coating, etc.) caused by an excessive temperature.

According to an embodiment of the present invention, the magnetic conductive material for cookware may further comprise a rare earth oxide. The rare earth oxide serves to further adjust the Curie temperature of the high-entropy alloy. The rare earth oxide is introduced into the high-entropy alloy to replace matrix atoms, thereby forming surface defects, which makes it possible to reduce the Curie temperature of the high-entropy alloy material.

The cost of the rare earth oxide is significantly lower than that of a rare earth metal. During solid phase sintering, the oxygen element of the rare earth oxide will be taken away by more active high-entropy alloy elements. As a result, rare earth elements will replace the high-entropy alloy elements, causing surface defects of the high-entropy alloy, thereby lowering the Curie temperature. Since the oxide components are not conductive, when mixed into the magnetic conductive material, they can further increase the resistance, so that the magnetic permeability will quickly disappear after the temperature reaches the Curie point, making it more responsive.

According to an embodiment of the present invention, the high-entropy alloy may comprise at least four of Mg, Al, Ti, V, Cr, Mn, Fe, Co, Ni, Cu, Zn, Zr, Nb, Mo, Sn, Hf, Ta, W, Pb, Si and B, and the rare earth oxide may comprise an oxide of at least one of lanthanides, scandium (Sc) and yttrium (Y), which have chemical properties similar to those of lanthanides, wherein the high-entropy alloy comprises at least one or more of Fe, Co and Ni. According to an exemplary embodiment of the present invention, examples of the high-entropy alloy may include: AlCrFeCoNi, AlCrFeTiNi, AlCrFeCoNiCu, AlCrFeMnNi, FeNiAlCr, Al₂CrFe₃CoNiCu, AlCr_{1.5}Fe₃MnNi and FeNiAl₂Cr, etc. The high-entropy alloy may be used alone or in combination in any proportion.

According to an embodiment of the present invention, lanthanides may include the 15 elements with atomic numbers 57 to 71 in the periodic table, namely, lanthanum (La), cerium (Ce), praseodymium (Pr), neodymium (Nd), promethium (Pm), samarium (Sm), europium (Eu), gadolinium (Gd), terbium (Td), dysprosium (Dy), holmium (H0), erbium (Er), thulium (Tm), ytterbium (Yb) and lutetium (Lu). According to an embodiment of the present invention, examples of the rare earth oxide may comprise yttrium oxide, lanthanum oxide, scandium oxide, europium oxide, etc. The rare earth oxide may be used alone or in combination in any ratio.

According to an embodiment of the present invention, based on the total amount of substance of the high-entropy alloy and the rare earth oxide being 100%, the amount of substance of the high-entropy alloy may be 80%-95%, for example, 80%-90%, 80%-95%, preferably 80% or 90%, and the balance is the rare earth oxide. Too high a rare earth oxide content will increase the resistance of the magnetic conductive material, weaken the electrical conductivity of the magnetic conductive layer, and ultimately cause it to fail to induct and conduct magnetism. If the content of the high-entropy alloy is too high, the role of the rare earth oxide in lowering the Curie temperature point cannot be assured.

According to an embodiment of the present invention, in the high-entropy alloy, based on the total atomic number of the high-entropy alloy, the atomic number of each element in the high-entropy alloy may be 5at% (atomic fraction) to 35at%, for example, 5at% to 30at%, 5at% to 25at%, 5at% to 20at%, 5at% to 15at%, or 5at% to 10at%, and the total atomic number of Fe, Co and Ni may be 35at% to 95at%, for example, 40at% to 80at%, 45at% to 75at%, 50at% to 70at%, 55at% to 65at%, or 60at% to 65at%.

The preparation method of a magnetic conductive material for cookware according to the present invention will be described below.

The preparation method of the magnetic conductive material may comprise high-energy ball milling, solid phase sintering and mechanical crushing. Specifically, the preparation method for a magnetic conductive material may comprise: ball milling the high-entropy alloy and the rare earth oxide; solid phase sintering the ball milled powder; and mechanically crushing the mixture blocks obtained by the solid phase sintering, so as to obtain the magnetic conductive material with a desired particle size.

In the ball milling step, high-entropy alloy blocks and rare earth oxide granules may be placed in a ball mill according to a desired ratio. After ball milling and stirring at high speed, powder with a particle size of greater than 300 mesh is obtained. The ball milled powder is then kept at 80°C to 200°C for 2h to 4h to be dried. Ball milling can ensure that the particle size of the high-entropy alloy and the rare earth oxide is fine and the high-entropy alloy and the rare earth oxide are fully mixed.

Parameters of the ball mill may be set as follows: the rotation speed being 100r/min to 500r/min, the ball-to-material ratio being 2:1 to 20:1, the ball milling medium being anhydrous ethanol or polyvinyl alcohol, the ball mill atmosphere being vacuum or inert atmosphere (e.g., 99.999% argon atmosphere), and the ball milling duration is 20h to 50h. Here, anhydrous ethanol or polyvinyl alcohol will not dissolve raw materials, and the use of anhydrous ethanol or polyvinyl alcohol for ball milling can increase grinding efficiency and facilitate the refinement of powder.

In the solid phase sintering step, liquid paraffin can be added to the ball-milled powder. Then the mixture is fully mixed and pressed, and sintered at 800°C to 1,200°C for 5h to 8h, wherein the mass ratio of powder to liquid paraffin may be 5% to 10%, preferably 6% to 9% or 7% to 8%, and more preferably 5%. Through solid phase sintering, microscopic discrete powder particles can gradually form a continuous solid structure, reducing the overall free energy of the sample, thereby improving its strength.

In the mechanical crushing step, the crushed magnetic conductive material powder may be sieved to obtain a magnetic conductive material with a size of 200 to 800 mesh. A magnetic conductive material with a desired particle size can thus be obtained by mechanical crushing.

A pot according to an embodiment of the present invention will be described below in reference to the accompanying drawing.

Fig. 1 is a view showing a pot comprising a magnetic conductive material according to an embodiment of the present invention.

In reference to Figure 1, the pot comprises a body and a magnetic conductive layer formed on an outer bottom surface of the body. The magnetic conductive layer comprises the above-mentioned magnetic conductive material. The magnetic conductive material may be sprayed on the outer bottom surface of the body by a spraying process to form the magnetic conductive layer. When the pot is heated to the Curie temperature, the pot can operate at low power, thereby preventing the problem of dry burning and burnt bottom, which may be caused if the temperature continuously rises during use.

The magnetic conductive material of the present invention uses a high-entropy alloy and a rare earth oxide to lower its Curie temperature, so that when the heating temperature reaches the Curie temperature, the magnetic conductive material operates at low power, thereby preventing the magnetic permeable products (such as induction cooker compatible cookware) from dry burning and burnt bottom, which may be caused if the temperature continuously rises during use.

The preparation method of the magnetic conductive material of the present invention will be described in detail below with reference to examples.

### Embodiment 1

The pot according to Embodiment 1 is prepared by the following steps.

### 1. Preparing a magnetic conductive material

Two raw materials, high-entropy alloy AlCrFeCoNi and lanthanum oxide, are ball milled in a ball mill at a molar ratio of 4:1. The whole process is carried out in a 99.999% argon atmosphere. The powder obtained by the ball milling has a particle size of +500 mesh, and is then kept at 120°C for 2 hours to be dried. Ball mill parameters may be: the ball milling medium being anhydrous ethanol; the speed being 300 r/min, the ball-to-material ratio being 12:1, and the ball milling duration being 30 h;
5% liquid paraffin by weight is added to the powder obtained by the ball milling, and the mixture is fully mixed and pressed, and then solid-phase sintered at 1,100°C for 6h;
the magnetic conductive material blocks obtained by the solid phase sintering are mechanically crushed and then sieved to obtain a magnetic conductive material with a particle size of 200 mesh to 800 mesh.

### 2. Preparing a Pot

A pretreated pot substrate (made of aluminum) is selected. A magnetic conductive material with an average particle size of 400 mesh is selected and loaded respectively into a powder feeder. The magnetic conductive material is sprayed on the outer bottom surface of the pot substrate to complete the manufacture of the pot of Embodiment 1. The parameters of the spraying process are set as follows: the spraying power being 25 kw, the powder feeding speed being 20 g/min, the spraying distance being 100 mm, the arc current being 400 A, the hydrogen pressure being 0.3 MPa, the hydrogen flow rate being 9 L/min, the argon pressure being 3 MPa, and the argon flow rate being 1500 L/min.

### Embodiment 2

The pot according to Embodiment 2 is manufactured by the same method as that of Embodiment 1, except that the molar ratio of the two raw materials, the high-entropy alloy AlCrFeCoNi and lanthanum oxide, is 9:1.

### Embodiment 3

The pot according to Embodiment 3 is manufactured by the same method as that of Embodiment 1, except that AlCrFeCoNi is replaced by FeNiAl2Cr.

### Embodiment 4

The pot according to Embodiment 4 is manufactured by the same method as that of Embodiment 1, except that lanthanum oxide is replaced by yttrium oxide.

### Embodiment 5

The pot according to Embodiment 5 is manufactured by the same method as that of Embodiment 1, except that lanthanum oxide is replaced by a mixture of lanthanum oxide and yttrium oxide (with molar ratio of lanthanum oxide to yttrium oxide being 1:1).

### Comparison 1

The pot according to Comparison 1 is manufactured by the same method as that of Embodiment 1, except that only AlCrFeCoNi powder is used as the magnetic conductive material.

### Comparison 2

The pot according to Comparison 2 is obtained by attaching a conventional cold-riveted stainless steel magnetic conductive sheet to the outer bottom surface of the pot substrate.

### Comparison 3

The pot according to Comparison 3 is manufactured by the same method as that of Embodiment 1, except that yttrium oxide is replaced by lanthanum.

### Comparison 4

The pot according to Comparison 4 is manufactured by the same method as that of Embodiment 4, except that yttrium oxide is replaced by yttrium.

### Testing of Performance Indicators

The pots obtained above are subjected to performance testing, and the test results are recorded in Table 1 below. The specific performance testing method is as follows:
Magnetic permeability power testing method: the standard induction cooker test according to household induction cooker compatible pot GB_T 32147-2015 is used;
Curie temperature testing: the pots are dry burnt on a household induction cooker at 2,100W, and the maximum temperature of the inner surface when the induction cooker stops heating is measured.

The initial power is the maximum output power a new product can achieve when it is used for the first time.

**Table 1**

| | Initial Power/W | Maximum Temperature/°C |
|---|---|---|
| Embodiment 1 | 1,680 | 160 |
| Embodiment 2 | 1,850 | 201 |
| Embodiment 3 | 1,700 | 155 |
| Embodiment 4 | 1,650 | 167 |
| Embodiment 5 | 1,720 | 172 |
| Comparison 1 | 1,900 | 284 |
| Comparison 2 | 1,900 | 455 |
| Comparison 3 | 1,800 | 255 |
| Comparison 4 | 1,820 | 258 |

It can be seen from the comparison between Embodiments 1 to 5 of the present invention and Comparisons 1 to 4 that a pot comprising the magnetic conductive layer formed by the magnetic conductive material according to the present invention has a low maximum temperature of the inner surface when an induction cooker stops heating. Therefore, the pot can be effectively prevented from being dry burned due to inadvertence of a user during use.

Although the present invention has been specifically shown and described with reference to exemplary embodiments of the present invention, those skilled in the art will understand that various changes in form and detail may be made thereto without departing from the spirit and scope of the present invention as defined by the claims and their equivalents. The embodiments should be considered in a descriptive sense only and not for the purpose of limitation. Therefore, the scope of the present invention is not limited by the specific modes of realization of the present invention, but by the claims, and all differences within the scope will be interpreted as included in the present invention.

## Claims

1. A magnetic conductive material for cookware, **characterized in that**, the magnetic conductive material is composed of a high-entropy alloy and a rare earth oxide, wherein:
- the high-entropy alloy comprises at least four of Mg, Al, Ti, V, Cr, Mn, Fe, Co, Ni, Cu, Zn, Zr, Nb, Mo, Sn, Hf, Ta, W, Pb, Si and B, and at least comprises one or more of Fe, Co and Ni, and,
- the rare earth oxide comprises an oxide of at least one of lanthanides, Sc and Y.

2. The magnetic conductive material according to claim 1, **characterized in that**, based on the total amount of substance of the high-entropy alloy and the rare earth oxides being 100%, the amount of substance of the high-entropy alloy is 80% to 95%, and the balance is the rare earth oxide.

3. The magnetic conductive material according to claim 1, **characterized in that**, based on the total atomic number of the high-entropy alloy, the atomic number proportion of each element in the high-entropy alloy is 5at% to 35at%, and the total atomic number proportion of Fe, Co and Ni is 35at% to 95at%.

4. The magnetic conductive material according to claim 1, **characterized in that**, the high-entropy alloy comprises at least one of AlCrFeCoNi, AlCrFeTiNi, AlCrFeCoNiCu, Al₂CrFe₃CoNiCu, AlCrFeMnNi, AlCr_{1.5}Fe₃MnNi, FeNiAlCr and FeNiAl₂Cr.

5. A method for preparing a magnetic conductive material, **characterized in that**, the method comprises the following steps:
- ball milling a high-entropy alloy and a rare earth oxide;
- solid phase sintering the ball milled powder; and,
- mechanically crushing the magnetic conductive material blocks obtained by the solid phase sintering, thereby obtaining the magnetic conductive material according to claim 1.

6. The method according to claim 5, **characterized in that**, in the ball milling step, ball milling is performed in a ball mill to obtain powder having a particle size greater than 300 mesh, which is then kept at 80°C to 200°C for 2h to 4h to be dried.

7. The method according to claim 6, **characterized in that**, in the ball milling step, parameters are set as follows: the rotation speed being 100r/min to 500r/min, the ball-to-material ratio being 2:1 to 20:1, the ball milling medium being anhydrous ethanol or polyvinyl alcohol, the ball milling atmosphere being vacuum or 99.999% argon atmosphere, and the ball milling duration being 20h to 50h.

8. The method according to claim 5, **characterized in that**, in the solid phase sintering step, liquid paraffin is added to the ball-milled powder, the mixture being fully mixed and pressed, and then sintered at 800°C to 1,200°C for 5 h to 8 h, wherein the mass ratio of powder to liquid paraffin being 5% to 10%.

9. The method according to claim 5, **characterized in that**, in the mechanical crushing step, the crushed magnetic conductive material powder is sieved to obtain a magnetic conductive material with a size of 200 to 800 mesh.

10. Cookware, **characterized in that**, the cookware comprises a body and a magnetic conductive layer formed on an outer bottom surface of the body, wherein the magnetic conductive layer comprises the magnetic conductive material according to any one of claims 1 to 4.
